**Europäisches Patentamt**

**European Patent Office**

**Office européen des brevets**

(11) Veröffentlichungsnummer: **0 465 876 A2**

# EUROPÄISCHE PATENTANMELDUNG

(21) Anmeldenummer: **91109950.5**

(22) Anmeldetag: **18.06.91**

(51) Int. Cl.5: **A01B 5/14**

(30) Priorität: **20.06.90 DE 4019612**

(43) Veröffentlichungstag der Anmeldung:
**15.01.92 Patentblatt 92/03**

(84) Benannte Vertragsstaaten:
**BE DE DK ES FR GB IT NL SE**

(71) Anmelder: **Hofmann, Hans**
**Reuttierstrasse 231**
**W-7910 Neu-Ulm Schwaighofen(DE)**

(72) Erfinder: **Hofmann, Hans**
**Reuttierstrasse 231**
**W-7910 Neu-Ulm Schwaighofen(DE)**

(54) **Pflug, insbesondere Umkehrrotorpflug wie Scheibenkehrpflug und dgl.**

(57) Ein Pflug insbesondere Scheibenpflug ggf mit Umkehrmöglichkeit weist eine vorne an dem Pflugrahmen (3) angeordnete teilweise als Welle drehbar angeordnete Anbauschiene (1a) auf, deren Steckzapfen (1b) an Enden von Stirnkurbelarmen (16) von sich in einer Ebene in entgegengesetzter Richtung erstreckenden Stirnkurbeln (15) der Abauschiene (1a) erstrecken und hiermit die Seiteneinstellung des Pfluges z.B durch einen an einem Stellbogen feststellbaren an der Anbauschiene (1a) angeordneten Hebel und/oder durch einen elektrischen oder hydraulichen Antrieb z. B. Linearmotor (28,29) zur Seiteneinstellung des Pfluges und zum Transport feststellbar erfolgt.

Durch wenigstens eine weitere Welle 17 kann dabei über Kettenzüge 24,27 und dergl. und Getriebe 21,22 eine Verstellvorrichtung 5 sowohl für die Pflugkörper 7 als auch für Landstützräder 19 und ein Wechselgetriebe 19 in einfacher Weise und ggf ein Furchenrad 39 betätigt werden.

Der Haupt- und Schwenkrahmen (3,4) besteht vorteilhaft aus mit Querholmen (3b,5,b) verbundenen Längsholmen, wobei mindestens die Längsholme (3,5) an z.B. zwei Stellen einen sie verbindenden Drehkranz (4) stabil abstützen.
Eine vereinfachte Ausführungsart sieht ein im Bereich der Frontseite der ersten Rahmeneinheit (1-3) angeordnetes Lager (30,30a,30b) und einen Wellenstrang vor, welcher die Antriebskraft vom Lager (30,30a,30b) aus in Richtung auf das Antriebsgehäuse (8) weiterleitet, wobei der Wellemstrang (8b) mindestens über einen Teil seiner Länge oberhalb der zweiten Rahmeneinheit (5) verläuft.

FIG. 1

EP 0 465 876 A2

Die Erfindung betrifft einen Pflug, insbesondere Rotorpflug wie Scheibenpflug, z.B. mit Umkehrmöglichkeit durch Verschwenkung der Pflugwerkzeuge und dgl. Maschine.

Die Einstellung von Pflügen um die x-Achse nach der Seite ist bei Anbau- und Aufsattelpflügen problematisch. Bei Pflügen mit Dreipunktaufhängung z.B. ist die Seitenneigung in ebenem Gelände so einzustellen, dass die Pflugwerkzeuge immer senkrecht zur Furchensohle stehen und die nebeneinander liegenden Furchen in einer Ebene liegen, was bei wechselnden Tiefen und bodenmächtigen Ungleichheiten wie Bodenwellen oft nicht gewährleistet ist und ungleiches, die Erntearbeiten erschwerendes Wachstum zur Folge hat. Am Hang dagegen muss man oft aus Gründen der Wasser- und Bodenhaltung und auch bei wechselndem Hang die Pflugkörper in verschiedene Lagen zur Furchensohle einstellen. In beiden Fällen sind die notwendigen Einstellarbeiten, insbesondere bei Umkehrpflügen umständlich und zeitraubend, weil entweder Anschläge bei Drehpflügen oder bei Beetpflügen die Unterlenker des Schleppers gewöhnlich an jedem Furchenende zu verstellen wären.

Desweiteren ist die Abstüzung, insbesondere bei Umkehrrotorpflügen wie Scheibenkehrpflügen ungenügend, weil z.B. die Vorrichtung für einen wechselnden Einsatz der hierbei auf beiden Seiten erforderlichen Landstützräder und die Verstelleinrichtung für den Schwenkrahmen und das Furchenrad räumlich und antriebsmässig schwer miteinander vereinbar und unverhältnismässig aufwendig sind, sodass diese Probleme bisher nicht zu lösen waren und die Scheibenzahl und damit die Arbeitsbreite begrenzt ist.

Umkehrpflüge mit Scheiben oder symmetrischen Scharen kamen bisher trotz ihrer grossen Vorteile gegenüber den durch drehende Massen ausserordentlich beanspruchten Drehpflügen und trotz ihrer besseren ein Eggen grösstenteils erübrigenden Bodenauflockerung und -krümelung kaum zum Einsatz. Das liegt u.a. daran, dass der bekannte Umkehrmechanismus dem kompakteren Drehmechanismus gegenüber wegen seiner aufgegliederten Bauweise störanfälliger ist. Auch sind Anbau- bzw. Aufsattel-Rotorpflüge auf Grund der üblichen Rahmenkonstruktion auf eine kleine Scheibenzahl eingeschränkt, sodass infolge der notwendigen Überdeckung der Pflugwerkzeuge nur schmale Bodenstreifen bearbeitet werden können.

Aus der DE-A 1 156 264 ist z.B. ein Beetpflug bekannt, der eine als Koppel eines Dreipunktgestänges ausgebildetes Pflugvordergestell aufweist, bei dem , wie in der Regel bei Beetpflügen, der landseitige Anschlusszapfen zu den Unterlenkern des Schleppers höher als der an der Welle gegenüberliegende furchenseitige angeordnet ist. Der Pflug hat daher immer eine Neigung nach der Landseite hin um die Neigung des in der Furche arbeitenden Schleppers auszugleichen. Die Welle ist an einem Stellbock festgestellt und an diesem zur Arbeitsbreiteneinstellung lediglich bis zu 60° nach einer Seite zu verdrehen. Um bei dem bekannten Beetpflug an Schlepper sowohl nach der Norm I als auch nach der Norm II des Dreipunktgestelles anschliessen zu können ist auf jedes Ende der Welle ein Zapfenhalter mit in Bezug auf die Wellenachse gegeneinander versetzten Zapfen verschiedenen Durchmessers in Einsatz zu bringen. Dabei wird die Welle von dem Stellbock gelöst und von Hand um 180° verdreht und sodann wieder mit dem Stellbock verbunden ; oder aber es werden lösbar an der Welle befestigte Zapfenhalter an der mit dem Stellbock verbundenen Welle entsprechend verschwenkt. Eine Verstellung beim Arbeiten am Hang oder bei unebenem Gelände usf., die bei Dreh- und Kehrpflügen beidseitig erfolgen und in einem grösseren Verstellkreis möglich sein müsste, ist nicht möglich und hieran ist auch nicht gedacht.

Aus der US-PS 4,869,327 ist ein Scheibenkehrpflug bekannt, der hinsichtlich seiner Abmessungen und seines Eigengewichtes als Anhängepflug ausgebildet ist. Der fachwerkartige Rahmen besteht aus je drei Längs- und Querholmen, die durch diagonale Streben verstärkt sind. Unterhalb des Pflugrahmens ist in der Mitte mittels Tragplatten ein Drehlager angeordnet, an dem ein Schwenkrahmen mit den auf einer zentralen drehbaren Welle angeordneten Scheiben in beide Umkehrstellungen durch einen Differentialzylinder verschwenkbar ist. Aussen ist der Schwenkrahmen desweiteren mit Rollen auf einem die Breite des Pflugrahmens einnehmenden an diesem befestigten Tragring abgestützt. Getragen ist der Pflug beim Transport durch zwei mittlere hydraulisch einsetzbare Transporträder. Weitere hydraulisch ausschwenkbare Radpaare vorne und hinten an dem Pflugrahmen dienen als Abstützung beim Pflügen und zwar läuft davon je ein vorderes wechselweise in der alten und je ein hinteres wechselweise in der neuen Furche und je ein freies drittes an der Landseite. Ein Antrieb der Scheiben ist hier nicht vorgesehen.

Aus der GB-PS 14 97 259 und DE-OS 28 35 317 sind Anbauscheibenkehrpflüge bekannt. Auch bei diesen ist ein hier balkenartig ausgebildeter Schwenkrahmen mittig an einem Drehlager angeordnet und desweiteren weit ausladend aussen in einer bzw. zwei Kulissen geführt, welche störanfällig ist bzw. sind. Wegen der verkehrbedingt zulässigen Breite der vorderen Kulisse sind diese Pflüge in der Scheibenzahl und damit in ihrer Arbeitsbreite stark eingeschränkt. Auch ist bei dieser Bauweise ein Antrieb der Scheiben nicht auszuführen.

Aus der EP-A O 149 488 ist zwar ein Scheibenpflug mit angetriebenen Scheiben bekannt, bei welchem ein an der Zentralwelle angeordnetes Winkelgetriebe mit der Schlepperzapfwelle verbindbar ist. Eine Umkehr der Arbeitsrichtung ist bei einer solchen Beetpflugkonstruktion nicht möglich, weil gleichzeitig die Umlaufrichtung umgekehrt und eine an jeder Seite unerlässliche Abstützung erfolgen sowie das Furchenrad umstellbar ausgebildet sein müsste. Auch hierbei ist die Scheibenzahl mit Rücksicht auf die zulässige Transportbreite stark eingeschränkt.

Die Aufgabe der Erfindung besteht allgemein darin, einen Konstruktiv einfachen Pflug, insbesondere angetriebenen Umkehrrotorpflug, gemäss den oberbegrifflichen Merkmalen der Ansprüche 1 - 5 und 21 zu schaffen, dessen Neigung für Arbeiten am Hang, bei Bodenwellen und dgl., insbesondere bei Umkehrrotorpflügen, erforderlichenfalls nach beiden Seiten um 180° verstellbar ist, der gegebenenfalls an der jeweiligen Landseite gegen Abtrift und gegebenenfalls zur Tiefeneinstellung wechselweise abstützbar ist, bei welchem das Drehlager des Schwenkrahmens an dem Pflugrahmen kompakter und kippsicherer und weniger Verschleissbehaftet ist und der trotz grösserer Verwindungssteifheit leichter und somit wendiger gebaut und konstruktiv einfach für eine grössere Pflugwerkzeugzahl bei Einhaltung der zulässigen Transportbreite auszulegen und am Schlepper anbau-, anhäng- bzw. aufsattelbar und ggf. durch diesen in beiden Umlaufrichtungen antreibbar ist und bei dem ggf. alle Verstellvorrichtungen, z.B. bei einem Umkehrrotorpflug, antriebsmässig so miteinander verbunden sind, dass diese auf dem Vorgewende ohne gegenseitige Behinderung gleichzeitig betätigbar sind.

Die Aufgabe der Erfindung wird je nach Erfordernis durch einen Lösungskomplex der kennzeichnenden Merkmale der Ansprüche 1 bis 5 oder einer Kombination einzelner hiervon, sowie in einer besonders vereinfachten Ausführungsart eines angetriebenen Umkehrrotorpfluges gemäss den kennzeichnenden Merkmalen des Anspruchs 21, gelöst.

In den Unteransprüchen 6 bis 20 und 22 bis 40 sind sehr vorteilhafte Weiterentwicklungen der Erfindung aufgeführt.

Überraschend ist das sich in dem erfindungsgemässen angetriebenen Umkehrrotorpflug für viele gleichartige Landmaschinen verkörpernde Erfindungsprinzip wonach eine grösstmögliche Stabilität und Bauhöhe durch fachwerkartige Ausbildung des Pfluges dadurch erreicht wird, dass parallele Längsholmen des Haupt- und des Schwenkrahmens mit einem oberen und unteren Ring eines Drehkranzes an je zwei seitlichen Flächen miteinander verbinden und ggf. Betätigungsorgane mit horizontalen und vertikalen Drehachsen ebenfalls in einfacher, wenig Raum beanspruchender Weise miteinander verbunden sind.

Weitere durch die Erfindung erreichten Vorteile bestehen neben den aus der speziellen Beschreibung entnehmbaren darin, dass man nun bei allen Pflugarten, bei denen bisher eine einfache Seiteneinstellung und -abstützung nicht konstruktiv lösbar oder zu aufwendig erschien, eine solche vorsehen kann.

Durch die nun mögliche Betätigung des Antriebes und der Steuerung der Seitenneigung, der beidseitigen Abstützungen gegen Abtrift mit der Verschwenkeinrichtung der Pflugwerkzeuge wird.

- eine optimale weg- und zeitsparende Bodenbearbeitung,
- rasches Wenden und automatische Einstellung auf dem Vorgewende, am Hang oder bei Bodenwellen,
- Zeitersparnis durch Wegfall einer Beschränkung der Pflugwerkzeugzahl und somit grössere Arbeitsbreiten,
- rasche einfache Umwandlung des Pfluges für verschiedene Bodenbeschaffenheiten bzw. Stoppelbestand und dgl. in einen solchen mit Boden- oder Schlepperantrieb,
- eine Einsparung des zweiten Schwenkrahmen-Drehlagers erreicht.

Ein weiterer Vorteil besteht darin, dass der Pflug bei unter den Pflugrahmen eingeschwenktem Schwenkrahmen ohne weitere Massnahmen leicht und ohne Verkehrsbehinderung zu transportieren ist und dabei auch ohne Weiteres ein z.B. um eine horizontale Achse ausschwenkbares Transportrad verwendbar ist.

Zeichnungsbeschreibung

Die Erfindung ist im folgenden anhand einiger Ausführungsbeispiele bei Umkehrrotorpflügen darstellenden Schemazeichnung näher erläutert und beschrieben.

Es zeigt :
Figur 1 einen ersten erfindungsgemässen Umkehrrotorpflug mit Antrieb seiner Pflugwerzeuge in Draufsicht,
Figur 2 den Umkehrrotorpflug gemäss Figur 1 in Seitenansicht,
Figur 3 die Draufsicht auf eine vereinfachte Ausführung des Umkehrrotorpfluges gemäss Figur 1 und 2,
Figur 4 die Umkehrstellungen des Pfluges gemäss den Figuren 1 und 2,
Figur 5 einen zweiten erfingunsgemässen Umkehrrotorpflug in Draufsicht,
Figur 6 eine Seitenansicht des Umkehrrotorplfuges gemäss Figur 5,
Figur 7 einen dem zweiten Umkehrrotorpflug ähnlichen Umkehrrotorpflug mit Antrieb seiner Pflugwerkzeuge gemäss dem ersten Umkehrrotorpflug in Draufsicht, und

Figur 8 den Umkehrrotorpflug gemäss Figur 7 in Seitenansicht.

In der Zeichnung ist mit 3 ein aus Längsholmen 3a, 3a' und Querholmen 3b, 3b', 3b'', 3b''' bestehender Pflugrahmen eines Umkehrrotorpfluges, mit 1 ein vorne an diesem vorgesehenes Anbaudreieck zum Anbau desselben an einen durch seine Unterlenker 2 angedeuteten Schlepper und mit 5 ein an einem Drehkranz 4 in Umkehrstellungen verbringbarer aus Längsholmen 5a, 5a' und Querholmen 5b, 5b', 5b'' bestehender Schwenkrahmen mit Pflugwerkzeugen 7 an einer Welle 6. Der Pflugrahmen 3 und das Anbaudreieck 1 bilden eine erste Rahmeneinheit, mittels welcher der Umkehrrotorpflug an den durch seine Unterlenker 2 angedeuteten Schlepper kuppelbar ist, während der Schwenkrahmen 5 eine zweite Rahmeneinheit bildet, die mit der ersten Rahmeneinheit 1-3 mittels des zwischen der ersten und der zweiten Rahmeneinheit vorgesehenen Drehkranzes 4 mit mindestens etwa senkrecht verlaufender Achse drehbar verbunden ist. Wie in den Figuren veranschaulicht, ist der Drehkranz 4 sowohl an den beiden Längsholmen 3a, 3a' des Plfugrahmens 3, als auch an den beiden Längsholmen 5a, 5a' des Schwenkrahmens 5 besfestigt.

Mit 19a, 19b sind Landstützräder und mit 13a, 13b Furchenräder bezeichnet. 1c ist die Oberlenkertraverse, um welche der zum Transport durch die Unterlenker 2 angehobene und zur Arbeit abgesenkte Pflug schwenkt.

Zur Seiteneinstellung des Pfluges um die in Fahrtrichtung verlaufende x-Achse ist die als Welle ausgebildete Anbauschiene 1a um eine mindestens etwa horizontal und mindestens etwa rechtwinklig zur Fahrtrichtung verlaufende Achse an einer sich nach dem Boden A erstreckenden Abkröpfung 3c der Längsholme 3a, 3a' des Pflugrahmens 3 bzw. Verlängerung des Anbaudreiecks 1 gelagert und an ihren Enden mit sich entgegengesetzt, in einer Ebene erstreckenden Stirnkurbeln 15a, 15b versehen, an deren in ihrer Länge verstellbaren Armen 16a, 16b ihre mit den Unterlenkern 2 verbundenen Steckzapfen 1b angeordnet sind.

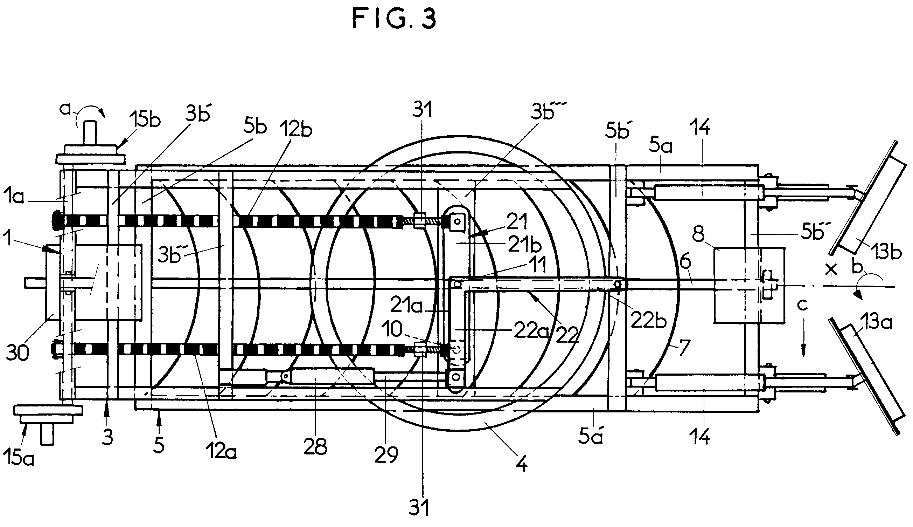

In der vereinfachten Ausführung gemäss Figur 3 sind zur Betätigung der Vorrichtung zur Seiteneinstellung Ketten 12a und 12b vorgesehen, die einerseits an Lastarmen 21a und 21b eines unten an einer an dem Querholm 3b''' des Pflugrahmens 3 errichteten, mit der geometrischen Achse des Drehkranzes 4 zentrierten Achse 11 gelagerten Doppelschwinghebels 21 angelenkt und andererseits an der Anbauschiene 1a, diese im Sinne eines Doppelzuges zum einen von oben und zum anderen von unten an ihrem Umfang umgreifend, befestigt sind. Der mit einem an seinem Ende an einer Kolbenstange 29 eines Linearmotors 28 (z.B.

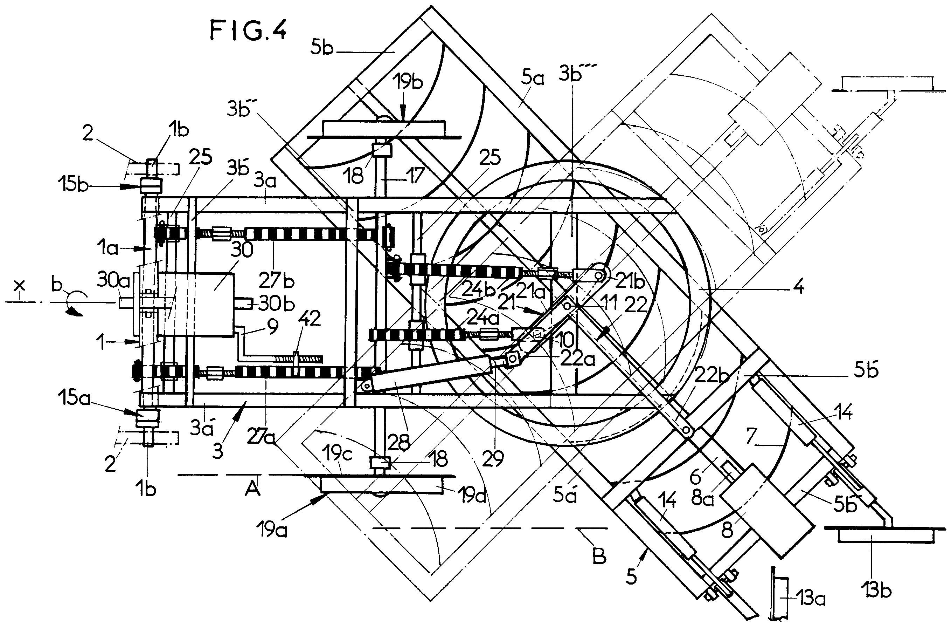

einen Arbeitszylinder) angelenkte Kraftarm 22a eines ebenfalls an einem oberen Stufensitz der Achse 11 gelagerten Winkelhebels 22 ist, durch einen Stift 10 bzw. Mitnehmer mit dem Lastarm 21a verbunden. Wird der Kraftarm 22a durch den Linearmotor 28 im Sinne eines Zuges an der Kette 12b ausgelenkt - die Kette 12a wird dabei an der Anbauschiene 1a aufgerollt -, wird die Stirnkurbel 15b aus ihrer gezeichneten horizontalen Stellung in Richtung des Pfeiles a - Figur 3 - zum Boden A hin geschwenkt und die Stirnkurbel 15a umgekehrt nach oben, sodass sich der Pflug um die in Figur 3 angedeutete x-Achse nach der durch den Pfeil b - Figur 3 - gekennzeichneten Seite neigt. Gleichzeitig wird durch den Lastarm 22b des Winkelhebels 22, der an dem Querholm 5b' des Schwenkrahmens 5 angelenkt ist, letzterer in die in Figur 4 ersichtliche Arbeitsstellung in welcher die Längsachse des durch die Welle 6 und die Pflugwerkzeuge 7 gebildeten Rotors schräg zur Fahrtrichtung verläuft, verschwenkt. Gleichzeitig wird durch den Linearmotor 14 das Furchenrad 13b um eine etwa horizontal verlaufende Achse zum Boden A geschwenkt - Fig. 4 -.

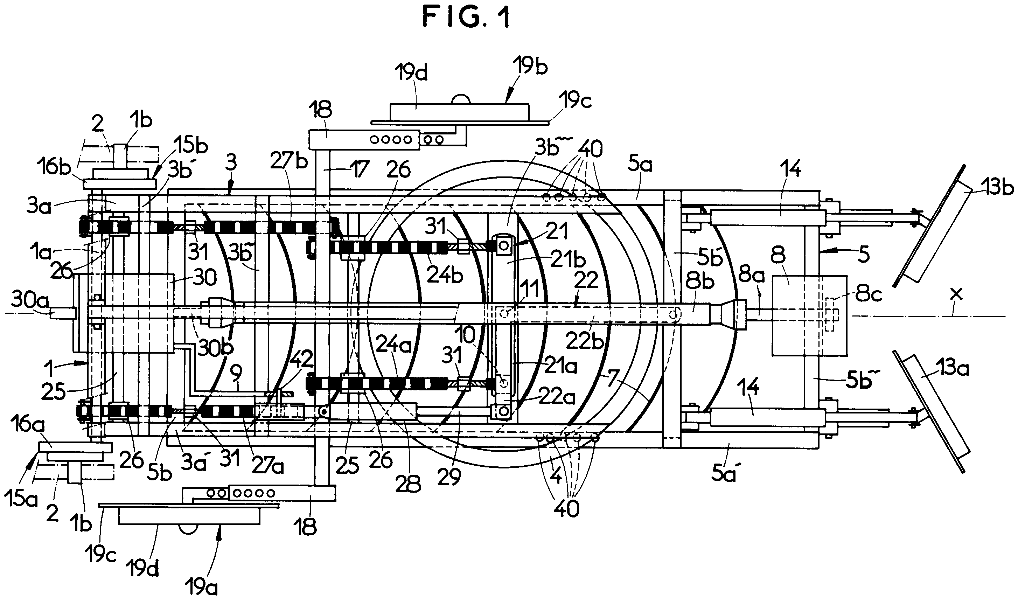

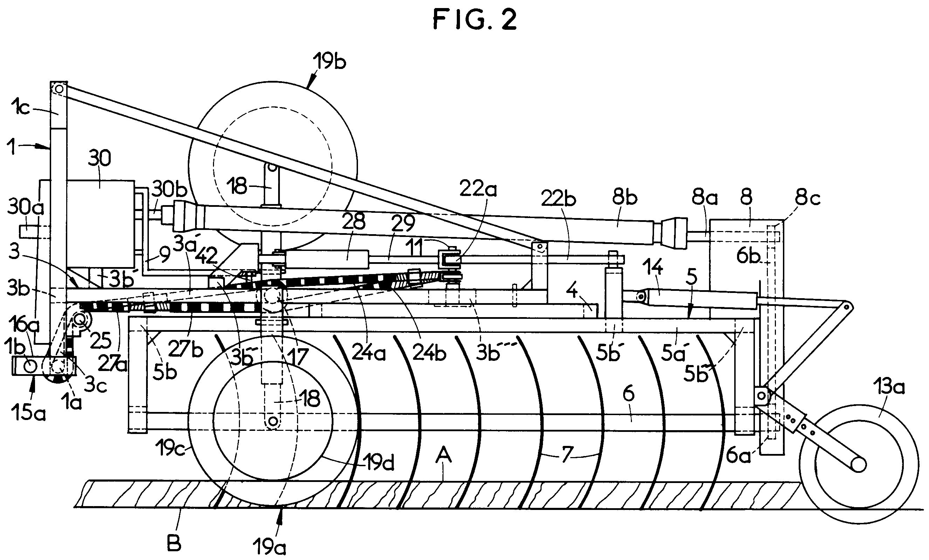

Bei den Ausführungsarten nach Figuren 1, 2 und 5 - 8 ist etwa in der Mitte zwischen der Anbauschiene 1a und des Doppelschwinghebels 21 an den Längsholmen 3a, 3a' des Pflugrahmens 3 eine Welle 17 drehbar gelagert, an deren beiden Enden sich in einer Ebene entgegengesetzt erstreckende Stirnkurbelarme 18 angebracht sind, die ebenso wie die Stirnkurbeln 15a, 15b in der Transportstellung des Pfluges horizontal liegen. Bei dieser Ausführungsart sind an den Lastarmen 21a, 21b des Doppelschwinghebels 21 Ketten 24a, 24b angelenkt, welche an der Welle 17, diese zum einen (24a) von oben und zum anderen (24b) von unten im Sinne des beschriebenen Doppelzuges am äusseren Teilumfang umgreifend, angebracht sind. An der der Aufhängung der Ketten 24a, 24b an der Welle 17 etwa 180° am Umfang nach innen versetzten Seite sind desweiteren Ketten 27a und 27b angebracht, welche an der Anbauschiene 1a im Sinne des oben beschriebenen Doppelzuges aufgehängt sind. Bei der oben beschrieben Betätigung und Neigung des Pfluges in Richtung des Pfeiles b wird das Landstützrad 19a zusätzlich in Stützstellung auf der Landseite verbracht. Wie zu sehen, bestehen die Landstützräder 19a, 19b zur Aufnahme der starken Seitenkräfte aus Führungsscheiben 19c und Stützreifen 19d. Zur besseren Führung der Ketten 24a, 24b, 27a, 27b sind an den Querholmen 3a, 3a' des Pflugrahmens 3 nahe der Anbauschiene 1a und der Welle 17 Stangen 25 mit die Ketten 24a, 24b, 27a, 27b aufnehmenden drehbar angeordneten Büchsen 26 vorgesehen. Spannschlösser 31 dienen zum Spannen der Ketten 12a, 12b, 24a, 24b, 27a, 27b.

Bei den Ausführungsbeispielen gemäss Figuren 1-4, 7 und 8 sind die auf der Welle 6 angeordneten, hier als Scheiben ausgebildeten Pflugwerkzeugen 7 angetrieben. Hierzu ist an dem Querholm 3b', d.h. im Bereich der Frontseite des Pflugrahmens 3, wo sich das Anbaudreieck 1 erstreckt, ein Wendegetriebe 30 angeordnet, dessen Lage gegenüber dem Pflugrahmen 3 und dem Anbaudreieck 1, während des Schwenkens des Schwenkrahmens 5 und des Rotors 6-7, deshalb konstant bleibt, und welches ebenfalls als Zwischenlagerung dient. Das Wendegetriebe 30 weist einen Anschlusstutzen 30a zur Verbindung mit der als Antriebsquelle dienenden Schlepperzapfwelle auf, während an dessem Anschlusstutzen 30b - wie in Figur 1, 2, 7 und 8 veranschaulicht - eine diesen mit einem Anschlusstutzen 8a eines hinten an dem Schwenkrahmen 5 angeordneten Getriebes 8 verbindende Gelenkwelle 8b angeschlossen ist. Aus diesen Figuren ist ebenfalls zu entnehmen, dass die einen Wellenstrang bildende Gelenkwelle 8b höher als und oberhalb des Schwenkrahmens 5 verläuft. Ein Antriebsstirnrad 8c des Getriebes 8 bildet mit einem mit dem hinteren Ende der Welle 6 gekuppelten Antriebsstirnrad 6a einen Kettenzug 6b. Das Wendegetriebe 30 wird bei Umkehr des Pfluges durch ein Schaltgestänge 9, welches durch einen Mitnehmer 42 mit der Kette 27a verbunden ist, umgeschaltet, wobei die der Arbeitsstellung des Schwenkrahmens 5 und des von diesem getragenen Rotors 6-7 entsprechenden Drehrichtung des Rotors eingestellt wird.

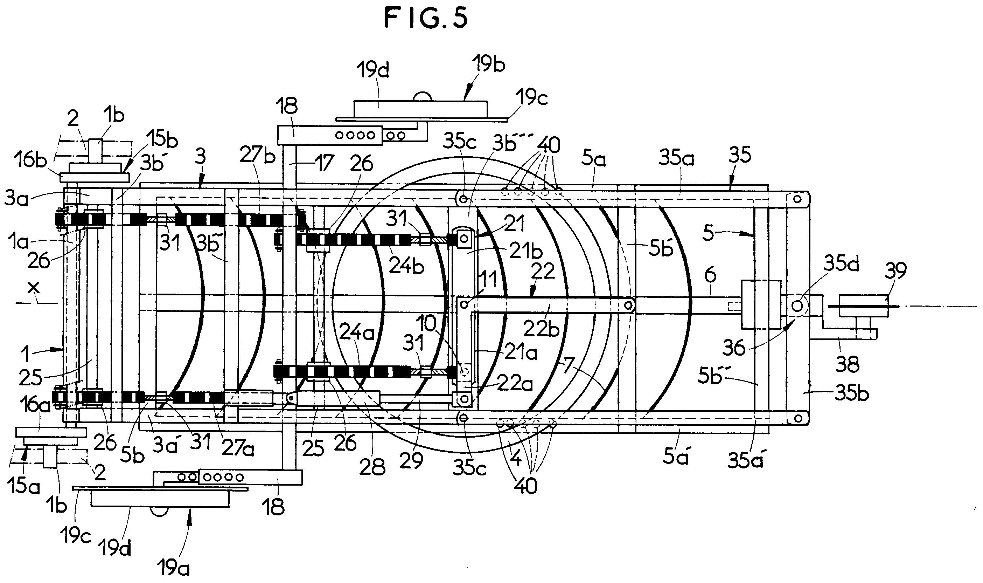

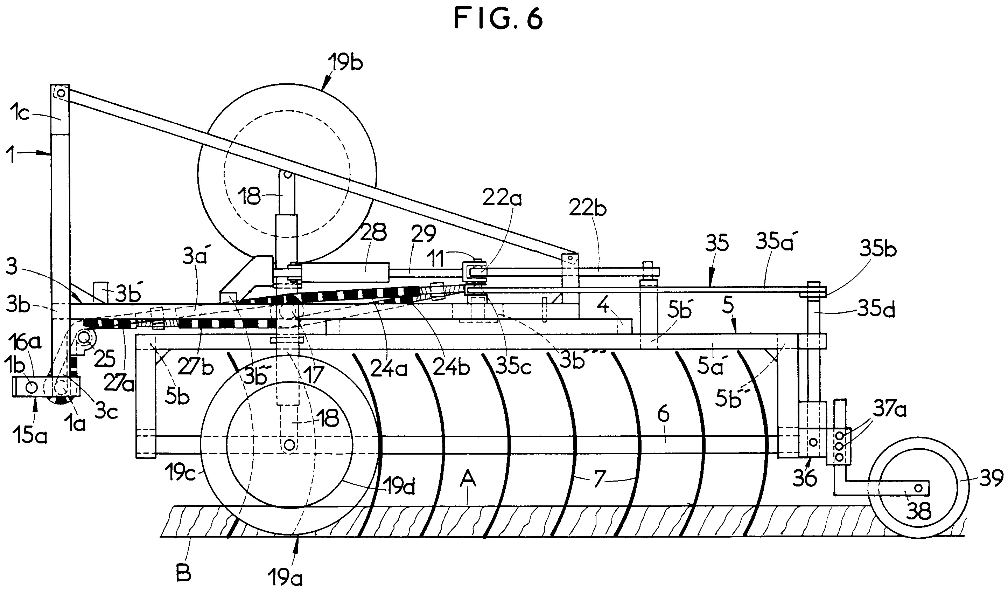

In den Figuren 5 und 6 ist eine andere Ausführung eines selbsttätig mit der Verschwenkung des Schwenkrahmens 5 sich einstellendes Furchenrad 39 gezeigt. Dieses ist mit seinem Tragarm 38 an einem Gelenk 36 (mit mindestens etwa senkrechter Achse) des Schwenkrahmens 5 gelagert. Löcher 37a dienen zur Tiefeneinstellung desselben. Der Tragarm 38 ist, wie zu sehen mit einer Welle 35d einer Parallelschwinge 35 verbunden, deren parallel an den Längsholmen 3a, 3a' des Plugrahmens 3 an Drehgelenken 35c angelenkte Stangen 35a, 35a', andererseits gelenkig mit einer die Welle 35d betätigenden Querstange 35b verbunden sind. Wie in Figur 5 veranschaulicht, ist sowohl die geometrische Achse des Gelenkes 36 als auch die Symmetrieachse des Furchenrades 39 in der die Längsachse der Welle 6 enthaltenen Vertikalebene enthalten.

In den Figuren 1, 3, 5 und 7 wird der Pflug in seiner Transportstellung gezeigt in welcher der Schwenkrahmen 5 und der von diesem getragene Rotor 6-7 sich in Transportrichtung ertrecken.

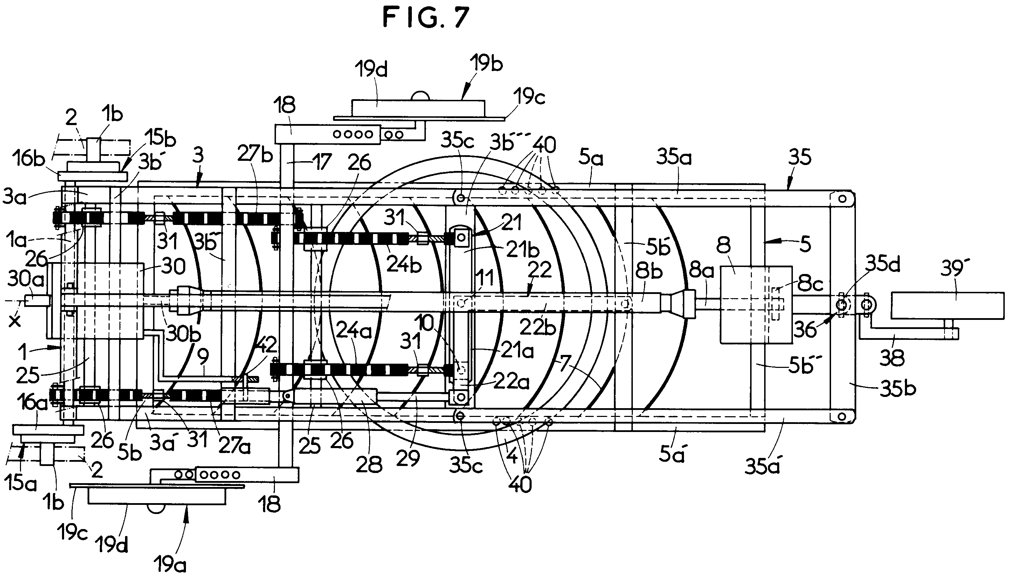

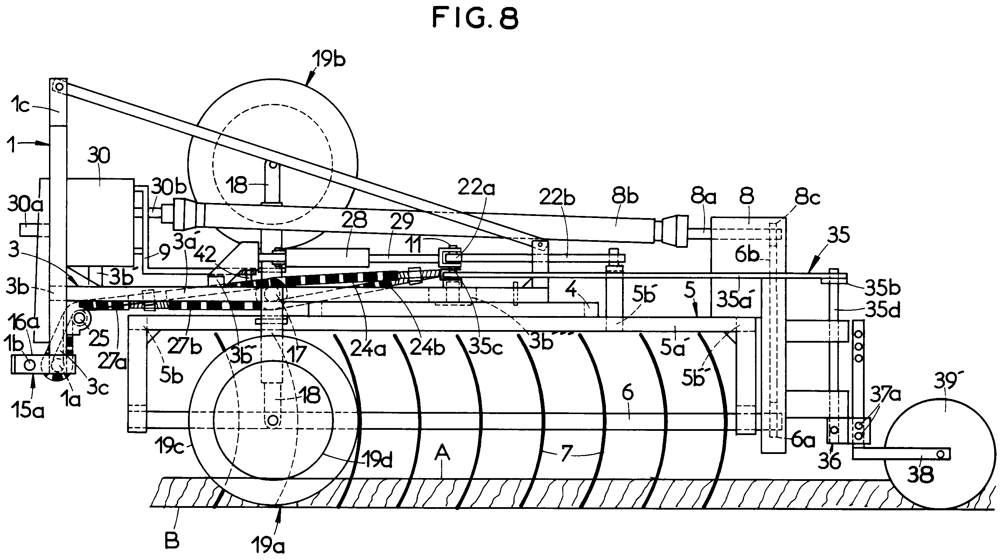

Figuren 7 und 8 zeigen eine weitere Ausführung eines erfindungsgemässen Pfluges, welcher etwa dem Pflug gemäss Figuren 5 und 6 ähnlich ist, dessen Rotor 6-7 jedoch wie im Ausführungsbeispiel gemäss Figuren 1-4 angetrieben wird. In diesem Ausführungsbeispiel ist ebenfalls vorgesehen, dass das Furchenrad 39', dessen Lage der Lage des Furchenrades 39 ähnlich ist, während des Transportes als Transportrad, auf welchem sich der Pflug abstützt dienen kann. Hierzu kann dann z.B. der Oberlenker des Schleppers abgenommen werden.

Der erfindungsgemässe Umkehrrotorpflug funktioniert wie folgt : Bei dem Pflug in Figur 4 ist der Schwenkrahmen 5 mit Vollinien in einer Arbeitsstellung und strichliiert in der Arbeitsstellung zuvor angedeutet. In der Wechselstellung wurde der Pflug durch die Unterlenker 2, sich um den Oberlenker 1c schwenkend, ausgehoben. Dabei wird fast gleichzeitig der Linearmotor 28 betätigt, welcher über den Lastarm 22b des Winkelhebels 22 den Schwenkrahmen 5 um 90° aus der strichliierten Stellung nach der anderen Seite verschwenkt, wobei die damit verbundene Doppelschwinge 21 über die Ketten 24b und 27b gleichzeitig die Landstützräder 19a, 19b sowie die Stirnkurbeln 15a, 15b ebenfalls in die Umkehrstellung verbringen, wobei sich der Pflug durch die Verdrehung der Steckzapfen 1b in die durch den Pfeil b gekennzeichnete Richtung entgegen der Neigung des mit einem Hinterrad in der Furche bewegten Schleppers um die x-Achse mit den Pflugwerkzeugen parallel zum Boden A hin neigt und das Landstützrad 19a auf der Landseite zum Einsatz kommt und das Furchenrad 13b in der durch das letzte Pflugwerkzeug 7 gezogenen Furche rollt.

Die Länge der Kraft- und Lastarme des Winkelhebels 22, des Doppelschwinghebels 21 und der Stangen 35a, 35a' sowie der Durchmesser der Wellen 1a und 17 sind dabei in einfacher Weise so aufeinander abzustimmen, dass sich die dabei bewegten Pflugteile in ihrem Bewegungsablauf nicht behindern und gleichzeitig einsatzbereit sind. Dieses ermöglicht in vorteilhafter Weise auch eine kurze Baulänge selbst von eine grössere Anzahl Pflugwerkzeuge aufweisenden Pflügen.

Die mit Löchern 40 angedeutete Verschraubung des Drehkranzes 4 dienen zur Verschiebung des Schwenkrahmens 5 an den Längsholmen 3a, 3a' des Pflugrahmens 3, womit eine Anpassung an verschieden breite Schlepper in besonders einfacher Weise möglich ist.

Bei Abnahme der Gelenkwelle 8b und/oder der Kette 6b kann der Pflug mit Bodenantrieb der Pflugwerkzeuge 7 verwendet werden. Eine sinngemässe Ausführung der Erfindung ist natürlich auch bei Scheibensaatpflügen und ähnlich betriebenen sonstigen Maschinen möglich. Die Ketten 24a, 24b, 27a, 27b sind natürlich auch durch gleichwirkende Getriebeglieder wie z.B. durch Gestänge ersetzbar.

Bei den gezeigten Ausführungsbeispielen ist der die Antriebskraft vom Wendegetriebe 30 zum Getriebe 8 weiterleitende Wellenstrang durch eine einzige Gelenkwelle 8b gebildet. Es ist jedoch ohne weiteres möglich, dass in anderen Ausführungsformen mehrere Wellen verwendet werden können.

Die Erfindung ist auch bei Aufsattelpflügen, bzw. gezogenen Pflügen verwendbar.

**Patentansprüche**

1. Pflug mit einer vorne an dem Pflugrahmen angeordneten als verdrehbare Welle ausgebildeten Anhänge- bzw. Anbauschiene für die unteren Lenker z.B. einer Dreipunktaufhängung, deren Anschlußzapfen an stirnkurbelartig an ihren Enden angebrachten Armen in einer vertikalen Ebene um 180° einander entgegengesetzt sind, **dadurch gekennzeichnet,** daß der Anbauschiene (1a) ein ihr Verschwenken um 180° bzw. nach beiden Seiten ermöglichender Reversierantrieb zugeordnet ist.

2. Pflug, insbesondere Scheibenkehrpflug und dergleichen Maschine, bei welchen der Pflugrahmen aus einem rechteckigen aus Längs- und Querholmen zusammengesetzten Fachwerk besteht, unterhalb dem an einer Drehachse und/oder ringartigen Drehvorrichtung ein die Pflugkörper tragender Schwenkrahmen angeordnet ist, der durch einen am Pflugrahmen angeordneten Hydraulikzylinder in die beiden Umkehrstellungen der Pflugkörper verbringbar ist, **dadurch gekennzeichnet,** daß der Pflug vorzugweise als Anbaupflug ausgebildet ist und sowohl der Pflugrahmen (3) als auch der Schwenkrahmen (4) im wesentlichen aus zwei durch Querholme (3b,5b) miteinender verbundenen Längsholmen (3a,5a) besteht, die in ihrer Breite im wesentlichen übereinstimmen, sodaß sie in der Transportstellung im wesentlichen deckungsgleich sind und vorzugsweise durch einen handelsüblichen Drehkranz (4) miteinder verbunden sind und daß der Schwenkrahmen (5) -in der Transportstellung gesehen- gegebenenfalls vorne so zurückgesetzt ist, daß eine zwecks Tiefstellung vorgesehene Abkröpfung (3c) des Pflugrahmens (3) nach unten die Verschwenkung des Schwenkrahmens (3) nicht behindert und daß die Anbauschiene (1a) gemäß Anspruch 1 am vorderen bzw. unteren Ende der Längsholme (3a,5a) bzw. der Abkröpfung (3c) gelagert ist.

3. Pflug, insbesondere Scheibenkehrpflug und dergleichen Maschine, bei welchen zur Verstellung der Pflugkörper auf dem Vorgewende ein an einem Hauptrahmen gelagerter Antrieb wie Differentialzylinder einen um eine vertikale Achse drehbar gelagerten Schwenkrahmen bzw. Pflugkörper in die Umkehrstellungen verbringt, **dadurch gekennzeichnet,** daß der Antrieb (28,29) an einem Kraftarm (22a) eines an einer am Pflugrahmen (3) vorgesehenen Achse (11) gelagerten Winkelhebels (22) angreift, dessen Lastarm (22b) an einem mittels Drehkranz (4) an dem Pflugrahmen gelagerten Schwenkrahmen (5) und dergleichen Verstelleinrichtung für die Pflugkörper (7) Pflugrahmen und Drehkranz überkragend angelenkt ist und mit dem Kraftarm (22a) einer der Lastarme (21a) einer ebenfalls an der Achse (11) darunter gelagerten Doppelschwinge (21) z.B.durch einen Mitnehmerbolzen (10) verbunden ist und an den Lastarmen (21a,21b) der Doppelschwinge (21) je eine Kette (12a,12b) angelenkt ist, wovon eine erste (12a) an einer etwa horizontalen Welle zur Betätigung weiterer Einrichtungen, insbesondere der Anbauschiene (1a) gemäß Anspruch 1, diese von oben und eine zweite (12b), diese von unten im Sinne eines doppelseitigen Zuges umgreifend, befestigt ist, sodaß mit der Verstellung der Pflugkörper (7) gleichzeitig die jeweilige Seitenneigung des Pfluges verstellt wird.

4. Pflug, insbesondere Scheibenkehrpflug und dergleichen Maschine, bei dem wenigstens eine Abstützung gegen Abtrift wie ein am Ende eines Pflugkörper und dergleichen tragenden drehbar an einem Pflugrahmen angeordneten Schwenkrahmen vorgesehenes Furchenrad **dadurch gekennzeichnet,** daß ein Antrieb (28,29) zur Verstellung der Pflugkörper (7) an einem Kraftarm (22a) eines an dem Pflugrahmen (3) vorgesehenen Achse (11) gelagerten Winkelhebels (22) angreift, dessen Lastarm (22b) an dem Schwenkrahmen (5) und dergleichen Verstelleinrichtung für die Pflugkörper (7) angelenkt ist, wobei mit dem Kraftarm (22a) einer der Lastarme (21a) einer ebenfalls an der Achse (11) darunter gelagerten Doppelschwinge (21) z.B. durch einen Mitnehmerbolzen (10) verbunden und an beiden Lastarmen (21a,21b) der Letzteren je eine Kette (24a,24b) angelenkt ist, wovon eine erste (24a) an einer in parallelem Abstand zu der Anbauschiene (1a) hin an dem Pflugrahmen (3) drehbar gelagerten Welle (17) mit an ihren Enden angeordneten stirnkurbelförmigen aus Armen (18) und Landrädern (19) wie Führungsscheiben mit Reifen bestehenden in einer vertikalen Ebene einander entgegengesetzten Abstützungen, diese von oben und eine zweite (24b) diese von unten im Sinne eines doppelseitigen Zuges umgreifend befestigt ist und an der Welle (17) zwei weitere diese zum einen von oben und zum anderen von unten umgreifende und mit der Anbauschiene (1a) gemäß Anspruch 1, diese ebenso im Sinne eines Doppelzuges umgekehrt von unten und oben umgreifend verbundene Ketten (27a,27b) angebracht sind, sodaß gleichzeitig mit der Verstellung der Pflugkörper (7) ein Wechsel der Seitenneigung sowie der Landstützräder (19) erfolgt.

5. Scheibenpflug, insbesondere Scheibenkehrpflug, mit vom Schlepper angetriebenen Scheiben, wobei diese an einer gemeinsamen Welle gelagert sind, die ein Antriebszahnrad aufweist, das über ein Getriebe mit der Schlepperzapfwelle verbunden ist, **dadurch gekennzueichnet,** daß der Pflug einen hinten an dem Pflugrahmen (5) vorstehenden Schwenkrahmen (5) mit den an der Welle (6) angeoordneten Antriebsrad (6a) aufweist, das getriebemässig mit einem oberhalb des Schwenkrahmens angeordneten Getriebe (8) verbunden ist, dessen Antriebsstutzen (8a) mittels einer Gelenkwelle (8b) mit der Schlepperzapfwelle direkt oder mit einem vorne an dem Pflugrahmen (3) angeordneten Wendegetriebe (30) mit beidseitigen Anschlußstutzen (30a,30b) verbindbar ist und gegebenenfalls ein Schaltgestänge (9) des Wendegetriebes (30) mit der Kette (12a bzw. 27a) gegebenenfalls so verbunden ist, daß mit den Vorrichtungen gemäß den Ansprüchen 1 und 3 bzw. den Ansprüchen 1,3 und 4 die Umlaufrichtung der Scheiben entsprechend geändert wird.

6. Pflug nach Anspruch 1 oder Anspruch 1 und mindestens einem der folgenden Ansprüche, dadurch gekennzeichnet, daß die Anbauschine (1a) an der Abkröpfung (1) höhenverstellbar ist.

7. Pflug nach Anspruch 1 oder Anspruch 1 und mindestens einem der folgenden Ansprüche, daduch gekennzeichnet, daß die Arme (16a,16b) der Stirnkurbeln (15a,15b) in ihrer Länge verstellbar sind.

8. Pflug nach den Anspruch 2 oder Ansprüchen 2 und 3, dadurch gekennzeichnet, daß die Ketten (12,24,27) vor der Anbauschiene (1a) bzw. der Welle (17) über Stangen (25) bzw. an diesen angeordneten drehbaren Hülsen (26) oder Losräder geführt sind.

9. Pflug nach Anspruch 2 oder 2 und mindestens einem der folgenden Ansprüche, dadurch gekennzeichnet, daß die Ketten (12,24,27) mit Spannschlössern (31) versehen sind.

10. Pflug nach Anspruch 4 und mindestens einem der folgenden Ansprüche, dadurch gekennzeichnet, daß die Verschwenkung des Schwenkrahmens (5) bzw. der Pflugkörper (7) so in der Folge mit den Landstützrädern (19) gesteuert ist, daß die beidseitigen Schwenkbewegungen nicht behindert werden.

11. Pflug nach Anspruch 3 oder 3 und mindestens einem der folgenden Annsprüche, dadurch gekennzeichnet, daß der Kraftarm (22a) des Winkelhebels (22) etwa doppelt so lang wie die Lasthebel (21a,21b) der Doppelschwinge (21) und die Länge des Lastarmes (22b) deselben etwa dem Abstand des äußeren Querholmes (5b') des Schwenkrahmens (5) von der Achse (11) entspricht.

12. Pflug nach Anspruch 5, dadurch gekennzeichnet, daß das Getriebe (8) als Stufengetriebe ausgebildet ist.

13. Pflug nach Anspruch 2 oder 2 und mindestens einem der folgenden Ansprüche, dadurch gekennzeichnet, daß an dem Schwenkrahmen (5) wenigstens ein hinteres Furchenrad (13a,13b,39) angeordnet und über ein mit dem Lastarm (22b) des Winkelhebels (22) verbundenes Gestänge (nicht dargestellt) in Wirkstellung verbringbar ist.

14. Pflug nach Anspruch 2 oder 2 und mindestens einem der folgenden Ansprüche, dadurch gekennzeichnet, daß das Furchenrad bzw. die Furchenräder (13) durch einen Linearmotor (e) (32) (32a) gegebenenfalls wechselweise in Wirkstellung verbringbar ist (sind).

15. Pflug nach den Ansprüchen 2 und mindestens einem der folgenden Ansprüche, dadurch gekennzeichnet, daß ein schwenkbar und höhenverstellbar an dem Schwenkrahmen (5) mit einem Drehgelenk (36) angeordnetes Furchenrad (39) durch eine an den Längesholmen (3a,3b) des Pflugrahmens (3) und an einer Querstange (35b) angelenkten Stangen (35a) bestehenden Parallelschwinge (35) beim Verschwenken des Schwenkrahmens 5 über eine an der Querstange (35b) angeordnete mit dem Furchenradtragarm (38) verbindenden Schaltwelle (35d) in die Umkehrstellungen verbringbar ist.

16. Pflug nach Anspruch 2 oder 2 und mindestens einem der folgenden Ansprüche, dadurch gekennzeichnet, daß das Schaltgestänge (9) des Wendegetriebes (30) über einen an der Kette (12a,27a) angreifenden Mitnehmer (10) betätigbar ist.

17. Pflug nach Anspruch 2 oder 2 und mindestens einem der folgenden Ansprüche, dadurch gekennzeichnet, daß die Getriebeglieder (12,24 und 27) durch gleichartige Antriebsglieder wie z.B. ein Gestänge ersetzbar sind.

18. Pflug nach Anspruch 1 oder 1 und mindestens einem der folgenden Ansprüche, dadurch gekennzeichnet, daß durch entsprechende Bemessung der Hebelarme des Winkelhebels (22) und der Doppelschwinge (21) sowie der Durchmesser der Wellen (1a,17) sowie der Länge der Stangen (35a) ein ungehinderter und zeitlich gesteuerter Bewegungsablauf der betreffende Pflugteile gewährleistet ist.

19. Pflug, insbesondere nach Anspruch 2 oder Anspruch 2 und mindestens einem der folgende Ansprüche, dadurch gekennzeichnet, daß der Drehkranz (4) und damit der Schwenkrahmen (5) mittels einer mit Löchern (40) an den Längsholem (3a) des Pflugrahmens (3) angedeuteten Verschraubung in der x-Achse verchieb- und feststellbar ist.

20. Pflug nach Anspruch 5, dadurch gekennzeichnet, dass der Schwenkrahmen (5) hinten an dem Pflugrahmen (3) vorsteht und die die Gelenkwelle (8b) diesen, den Winkeltrieb (22) und den Drehkranz (4) gemäss den Ansprüchen 2, 3 und 4 überkragend angeordnet ist.

21. Umkehrrotorpflug bestehend aus :
a) einem mit Pflugwerkzeugen (7) versehenen Rotor (6-7), der von einer Antriebsquelle aus um seine, mindestens während der Arbeit, schräg zur Fahrtrichtung verlaufende Längsachse antreibbar ist, und
b) einem den Rotor (6-7) tragenden Rahmen (1-3-4-5), welcher, mindestens während der Arbeit, mittels mindestens einem Rad (13a, 13b, 39) auf dem Boden rollt,
wobei dieser Rahmen (1-3-4-5) aus :
(i) einer ersten Rahmeneinheit (1-3), mittels welcher der Umkehrrotorpflug an ein Fahrzeug kuppelbar ist,
(ii) einer zweiten, den Rotor (6-7) tragenden Rahmeneinheit (5), die mit der ersten Rahmeneinheit (1-3) mittels eines Gelenkes (4) verbunden ist, und
(iii) Kraftübertragungsorganen, die die von der Antriebsquelle erhaltenen Antriebskraft zum Rotor (6-7) übertragen, wobei diese Kraftübertragungsorgane unter anderem ein Antriebsgehäuse (8) aufweisen,
besteht,
gegebenenfalls nach mindestens einem der Ansprüche 1 bis 5, dadurch gekennzeichnet, dass
(i) das Gelenk (4), welches die zweite Rahmeneinheit, (5) mit der ersten Rahmeneinheit (1-3) verbindet, ein Gelenk mit mindestens etwa senkrechter Achse ist ;
(ii) die Kraftübertragungsorgane ein im Bereich der Frontseite der ersten Rahmeneinheit (1-3) angeordnetes Lager (30-30a-30b) und einen Wellenstrang (8b) aufweisen, welcher die Antriebskraft vom Lager (30-30a-30b) aus in Richtung auf das Antriebsgehäuse (8) Weiterleitet, wobei der Wellenstrang (8b) mindestens über ein Teil seiner Länge höher als die zweiten Rahmeneinheit (5) verläuft.

22. Umkehrrotorpflug nach Anspruch 21, dadurch gekennzeichnet, dass das Gelenk, welches die zweite Rahmeneinheit (5) mit der ersten Rahmeneinheit (1-3) verbindet, durch einen Drehkranz (4) gebildet ist, welcher zwischen der ersten (1-3) und der zweiten Rahmeneinheit (5) vorgesehen ist.

23. Umkehrrotorpflug nach Anspruch 22, dadurch gekennzeichnet, dass wenigstens die erste Rahmeneinheit (1-3) und ggf. die zweite Rahmeneinheit (5) mindestens im Bereich des Drehkranzes (4) zwei Längsholmen (3a, 3a') aufweist, an welchen der Drehkranz (4) beidseitig befestigt ist.

24. Umkehrrotorpflug nach mindestens einem der Ansprüche 21 bis 23, dadurch gekennzeichnet, dass Bestätigungsorganen (22, 22a, 22b, 28, 29) vorgesehen sind, welche zum Schwenken der zweiten Rahmeneinheit (5) gegenüber der ersten Rahmeneinheit (1-3) um die Achse des Gelenkes (4) dienen.

25. Umkehrrotorpflug nach Anspruch 24, dadurch gekennzeichnet, dass die Betätigungsorgane einen Arbeitszylinder (28) aufweisen, welcher einerseits mit der ersten Rahmeneinheit (1-3) und andererseits mit der zweiten Rahmeneinheit (5) verbunden ist.

26. Umkehrrotorpflug nach mindestens einem der Ansprüche 21 bis 25, dadurch gekennzeichnet, dass der Wellenstrang (8b) mindestens über ein Teil seiner Länge oberhalb der zweiten Rahmeneinheit (5) verläuft.

27. Umkehrrotorpflug nach mindestens einem der Ansprüche 21 bis 26, dadurch gekennzeichnet, dass die Kraftübertragungsorgane (30-30a-30b-8-8a-8b-8c-6a-6b) ein Antriebsgehäuse (30-30a-30b) aufweisen, dessen Lage gegenüber der ersten Rahmeneinheit (1-3) mindestens etwa konstant bleibt.

28. Umkehrrotorpflug nach Anspruch 27, dadurch gekennzeichnet, dass das Antriebsgehäuse (30-30a-30b), dessen Lage gegenüber der ersten Rahmeneinheit (1-3) mindestens etwa konstant bleibt, das im Bereich der Frontseite der ersten Rahmeneinheit (1-3) angeordnete Lager (30-30a-30b) bildet.

29. Umkehrrotorpflug nach mindestens einem der Ansprüche 21 bis 28, dadurch gekennzeichnet, dass die Kraftübertragungsorgane am hinteren Ende des Rotors (6-7) gekuppelt sind.

30. Umkehrrotorpflug nach mindestens einem der Ansprüche 21 bis 29, dadurch gekennzeichnet, dass die Kraftübertragungsorgane (30-30a-30b-8-8a-8b-8c-6a-6b) Drehrichtungänderungsorgane (30) aufweisen, mittels welchen die Drehrichtung des Rotors (6-7) veränderbar ist.

31. Umkehrrotorpflug nach Anspruch 30 und Anspruch 27 oder 28, dadurch gekennzeichnet, dass die Drehrichtungänderungsorgane (30) in dem Antriebsgehäuse (30-30a-30b) vorgesehen sind, dessen Lage gegenüber der ersten Rahmeneinheit (1-3) mindestens etwa konstant ist.

32. Umkehrrotorpflug nach Anspruch 30 oder 31, dadurch gekennzeichnet, dass die Drehrichtungänderungsorgane (30) während des Schwenkens der zweiten Rahmeneinheit (5) gegenüber der ersten Rahmeneinheit (1-3) mittels eines Schaltgestänges (9) betätigbar sind.

33. Umkehrrotorpflug nach mindestens einem der Ansprüche 21 bis 32, dadurch gekennzeichnet, dass das Rad (die Räder) (39) mittels welches (welcher) der Rahmen (1-3-4-5) mindestens während der Arbeit auf dem Boden rollt, mit dem Rahmen (1-3-4-5) mittels eines Gelenkes (36) mit mindestens etwa senkrechter Achse verbunden ist (sind).

34. Umkehrrotorpflug nach Anspruch 33, dadurch gekennzeichnet, dass dieses Rad (diese Räder) (39) mit der zweiten Rahmeneinheit (5) verbunden ist (sind).

35. Umkehrrotorpflug nach Anspruch 33 oder 34, dadurch gekennzeichnet, dass Betätigungsorgane (35-35a-35b-35c) vorgesehen sind, welche zum Schwenken des Rades (der Räder) (39) während des Schwenkens der zweiten Rahmeneinheit (5) gegenüber der ersten Rahmeneinheit (1-3) dienen.

36. Umkehrrotorpflug nach mindestens einem der Ansprüche 21 bis 35, dadurch gekennzeichnet, dass seitenkräfteaufnehmende Organe (19a-19b-19c-19d) vorgesehen sind, welche mit dem Rahmen (1-3-4-5) mittels eines Gelenkes verbunden sind.

37. Umkehrrotorpflug nach Anspruch 36, dadurch gekennzeichnet, dass Betätigungsorgane (21-21a-21b-24a-24b-31-25-26) vorgesehen sind, welche zum Schwenken der seitenkräfteaufnehmenden Organen (19a-19b-19c-19d) während des Schwenkens der zweiten Rahmeneinheit (5) gegenüber der ersten Rahmeneineheit (1-3) dienen.

38. Umkehrrotorpflug nach mindestens einem der Ansprüche 21 bis 37, dadurch gekennzeichnet, dass die zweite Rahmeneinheit (5) und der von dieser zweiten Rahmeneinheit (5) getragene Rotor (6-7), in Transportstellung, sich mindestens etwa in Transportrichtung erstrecken.

39. Umkehrrotorpflug nach Anspruch 38, dadurch gekennzeichnet, dass ein Transportrad vorgesehen ist.

40. Umkehrrotorpflug nach mindestens einem der Ansprüche 21 bis 39, dadurch gekennzeichnet, dass an der Frontseite der ersten Rahmeneinheit (1-3), kurbeln (15a, 15b) vorgesehen sind, welche je mit einem Steckzapfen (1b) für die Unterlenker (2) des Fahrzeuges versehen sind und mit der ersten Rahmeneinheit (1-3) mittels eines mit horizontaler, rechtwinklig zur Fahrtrichtung verlaufenden Achse aufweisenden Gelenkes zur Orientierung des Pfluges um die in Fahrtrichtung verlaufende X-Achse verbunden sind.

# FIG. 1

EP 0 465 876 A2

FIG. 2

FIG. 3

FIG.4

# FIG.5

FIG.6

FIG.7

FIG.8